# EUROPEAN PATENT APPLICATION

(11) **EP 4 571 908 A1**
(43) Date of publication of application: **18.06.2025**
(21) Application number: 23215560.6
(22) Date of filing: 11.12.2023
(51) Int. Cl.: H01M 10/04, H01M 10/052, H01M 10/0587, H01M 50/107, H01M 50/533, H01M 50/538

(54) **BATTERY CELL AND METHOD FOR MANUFACTURING A BATTERY CELL**

(71) Applicant: CUSTOMCELLS Holding GmbH, 25524 Itzehoe (DE)
(72) Inventor: Löhrke, Andreas, Itzehoe (DE)
(74) Representative: LKGLOBAL Lorenz & Kopf Patentanwalt Attorney at Law PartG mbB

(57) **Abstract**

A first aspect of the present disclosure is related to a battery cell, comprising:
- an electrode stack with two electrode layers, an anode layer and a cathode layer, that are arranged over each other and wound-up as a role such that it comprises a curved surface, a top and a bottom;
- a plurality of tabs arranged at an edge of an electrode layer such that the tabs extend towards the top or the bottom of the electrode stack role and wherein the tabs comprise an angled part each, which is angled towards the respective top or bottom ;
- wherein the angled parts form a pre-defined pattern.

## Description

### Technical Field

This disclosure is related to battery cells and methods for manufacturing battery cells.

### Background

In cylindrical battery cells, like lithium-ion or alkaline batteries, the electrode roll needs to be connected to the battery contacts. The electrode stack inside the cell casing comprises layers of anode and cathode materials wound-up in a spiral or jelly-roll configuration, separated by a porous separator and soaked in an electrolyte solution. Terminal tabs extend from the electrode assembly and serve as connection means to the external contacts. The battery cell has two metal contacts-one for the cathode end and one for the anode. These contacts are typically metal caps or pins. The terminal tabs of the electrode assembly are connected to the battery contacts through methods such as welding or crimping, ensuring a secure electrical connection. Existing connections require laborious manufacturing processes, in particular when the electrical resistance of the connection between the jell-roll and the external battery pols should be minimized. Improvements in this area are required.

### Summary

An object of the present disclosure is to improve a battery cell.

This object is solved by the disclosed embodiments, which are defined in particular by the subject matter of the independent claims. The dependent claims provide information for further embodiments. Various aspects and embodiments of these aspects are also disclosed in the summary and description below, which provide additional features and advantages.

A first aspect of the present disclosure is related to a battery cell,
comprising:
- an electrode stack with two electrode layers, an anode layer and a cathode layer, that are arranged over each other and wound-up as a role such that it comprises a curved surface, a top and a bottom;
- a plurality of tabs arranged at an edge of an electrode layer such that the tabs extend towards the top or the bottom of the electrode stack role and wherein the tabs comprise an angled part each, which is angled towards the respective top or bottom ;
- wherein the angled parts form a pre-defined pattern.

An electrode layer can either be a cathode layer or an anode layer. An electrode stack comprises a cathode layer and an anode layer with a separator layer arranged in between.

A battery cell with a wound-up electrode stack can comprise all possible forms with a wound-up (i.e. rolled) electrode stack. For example a battery cell can comprise a cylindrically formed electrode stack. Additionally or alternatively, a wound-up electrode stack can have a form different from an ideal cylinder, e.g. oval, elliptic, or even rectangular, wherein in the latter the curved surface comprises a rather flat surface part and a sharply curved surface part at the edges of the electrode stack in order to achieve a wound-up electrode stack. In fact, a wound-up electrode stack can also be used for a prismatic battery architecture or a pouch-cell-based battery architecture. In particular a wound-up electrode stack can have a form adapted to an outer casing, wherein the outer casing might be formed according to environmental requirements that are not based on the electrical battery, e.g. based on a form of a car chassis.

A top and bottom of a wound-up electrode stack refer to the two opposite ends of the electrode stack that are separated by the curved surface. The top of the wound-up electrode stack can be the end where one pole (cathode) is located. The bottom of the electrode stack can be the end where the other pole (anode) is positioned. Additionally or alternatively, a cathode and an anode of a battery cell can be formed together at a top or at a bottom of a wound-up electrode stack. Embodiments of both architectures are described in the following.

Tabs serve as the points of electrical contact between the internal electrode stack and the external circuit. Battery cells, such as lithium-ion batteries, can have two tab types -one for the cathode and one for anode. The tabs for the two different electrode types can be made of different materials. An anode tab can be made of copper and is attached to the negative electrode material. It can extend from the wound-up electrode stack and is connected to the negative terminal of the battery. A cathode tab can be made of aluminum and is attached to the positive electrode material. It can extend from the wound-up electrode stack and is connected to the positive terminal of the battery. The tabs can be welded and/or crimped to the battery contacts (terminals) on the top and bottom of the cell casing to create a secure and low-resistance connection, ensuring the efficient transfer of electrical energy.

A tab can refer to a conductive strip or foil (e.g. formed of metal) that extends from the electrode stack inside a battery cell to provide an external electrical connection. One or more tabs can be thin, in particular only a few micrometer thick. A plurality of tabs can be formed at an edge of an electrode, e.g. as an electrode extension and/or as an uncoated part of the electrode (in particular in so called "tabless" electrode stacks). The tabs then extend similar to teeth or cams on the long side of the unwound electrode layer. One or more tabs can be made of the same material as the electrode and/or of a different conductive material. After the electrode stack is wound-up one or more tabs extend axially to the electrode stack, in particular parallel to an axis around which the electrode stack is wound-up.

A plurality of tabs comprise an angled part that is angled towards the surface of the respective top or bottom to which they extend to. The angled part of the tabs can be formed, e.g., by folding the extended tabs. The angled part can be parallel to the surface of the respective top or bottom. The angled part of the tabs form a pre-defined pattern.

A pattern can be a recurring arrangement and/or a predefined sequence of tabs. A pattern can also be pre-defined form produced by the tabs of one or both types of electrodes. The pattern can result in a connected tab area formed by a plurality of tabs and/or a disconnected tab area formed by a plurality of tabs. Therefore, one or more of these tabs can be arranged at predefined locations at the edge of an electrode. Additionally or alternatively, one or more of these tabs can be formed at the edge of an electrode in a pre-defined form.

A battery according to the first aspect of the present disclosure, can provide an effective current flow from the electrode stack to a cathode and/or anode. Furthermore, a tab-based current collector with small weight and and/or low ohmic resistance can be provided.

An embodiment of the first aspect is related to a battery cell,
wherein some adjacent tabs arranged at the edge of the electrode are separated from each other at a first distance and some adjacent tabs are separated from each other at a distance different from the first distance.

For example, a plurality of tabs consecutively arranged at an edge of an electrode layer (cathode or anode) can be formed with increasing distances (i.e. spacing) between each other. This can also be described as progressive notching of the electrode layer, such that tabs at different positions (relative to the start or the end of the electrode) remain. With such a pattern, when wound-up cylindrically, the angled part of tabs can be arranged radially over one another, such that a single tab area can be realized.

An embodiment of the first aspect is related to a battery cell,
wherein some of the tabs arranged at the edge of the electrode layer differ in a length parallel to the edge of their electrode layer.

For example, a plurality of tabs consecutively arranged at an edge of an electrode layer (cathode or anode) can be formed with increasing or decreasing length. This can also be described as progressive notching of the electrode layer, such that tabs at different sizes remain. With such a pattern, when wound-up cylindrically, the angled part of tabs can form a tab area formed like a sector of a circle. Depending on the increase/decrease of the length of the tabs, the sector-of-a-circle area can be wider or smaller, e.g. such that the area covers half of the top or bottom area of the electrode stack. This provides a lightweight and highly conductive tab-based current collector.

An embodiment of the first aspect is related to a battery cell,
wherein some of the tabs arranged at the edge of the electrode layer differ in a length perpendicular to the edge of the electrode layer.

The length perpendicular to the edge of the electrode layer can also be termed depth of the tabs relative to the electrode layers. The longer a tab the more area the angled part of the tab can cover of a top or bottom surface of an electrode. For example, tabs can be formed with large distance such that not in every revolution in the wound-up electrode stack, an angled part of a tab meets another (angled part of a) tab, but only in every second revolution. In this case, the tabs that are formed to meet after every revolution can be formed with a shorter depth than tabs that are formed to meet in every second revolution. By the different depths of the tabs, it can be assured that the angled parts of the different tabs still touch each other.

In another embodiment, the angled parts of tabs are all angled to the center of a wound-up cylindrical electrode stack. The tabs are spaced at increasing distances such that two consecutive tabs meet in consecutive revolutions of the wound-up electrode stack. In this case, if all tabs would have the same length, the inner tab could overlap the center. This is undesired. In this case the inner tab or the first inner tabs could be formed with a small depth such that their angled parts do not overlap the center. Additionally, the outer tabs could be formed with a larger depth such that it is made sure that their angled part touches the tab arranged before them on the unwound electrode layer, i.e. that is arranged in the preceding revolution in the wound-up electrode stack.

Furthermore, the tabs can decrease in length such that the inner tab (or the inner tabs) do not cover the core of the electrode stack or are even formed over the core. Therefore, the tabs-length can decrease according to a pre-defined gradient function

An embodiment of the first aspect is related to a battery cell,
wherein one or more of the tabs of an electrode layer have angled parts that comprise a curved-cut end.

By providing tabs with curved-cut ends, tabs that are arranged such that they are next to each other in a wound-up electrode stack can be aligned to each other. Since the curvature of the wound-up electrode stack may increase with each winding that is closer to the core of the electrode stack, the ends of a plurality of tabs can be provided with different curvatures, depending on the curvature to which they will align to in the wound-up electrode stack.

An embodiment of the first aspect is related to a battery cell,
wherein one or more of the tabs of an electrode layer are sliced and/or perforated.

This is another way that can be used alternatively or additionally to curved-cut tab ends. The slices can be arranged perpendicular to the edge of the electrode to which the tab belongs to. Alternatively or additionally, slices can be slanted and have only a projected part that is perpendicular to the edge of their electrode. The sliced parts of a tab will deform relative to each other in case the electrode is wound-up. Then the slice part will partly overlap and thereby adapt to the curvature of the respective winding in which the tab is arranged. Sliced tabs can adapt to the required curvature. Furthermore, tensions within a tab that are due to the winding-up can be released.

An embodiment of the first aspect is related to a battery cell,
wherein some of the tabs of an electrode layer have angled parts that form a continuous area.

A continuous area generally refers to a region or space formed by tabs of a cathode or an anode that is unbroken and/or uninterrupted, e.g. an area where every part is connected to all other parts of the area over at least one part of the area. This can be achieved, e.g. by arranging the tabs in a pre-defined way (such that they are arranged radially over each other in a wound-up electrode stack) and by forming the angled parts such that they overlap with each other or at least are deep enough to touch each other. In this way, a current collector can be formed based on the angled parts of the tabs. This current collector can have a low electrical resistance and also can reduce weight compared to other architectures.

An embodiment of the first aspect is related to a battery cell,
wherein some of the tabs of an electrode layer have angled parts that form a plurality of continuous areas.

The tabs can also be arranged such that they form a plurality of continuous areas for the same electrode type, i.e. cathode or anode. Thereby, current collectors can be arranged symmetrically on a top (or on a bottom) of a battery cell.

An embodiment of the first aspect is related to a battery cell,
wherein some of the tabs of an electrode layer have angled parts that form one or more continuous areas that are tapered towards the center axis of the electrode stack role.

A tapered continuous area can have a form of a sector of a circle, e.g. in a cylindrical battery cell. Using tapered forms, in particular for cylindrical, oval, or elliptic cell architectures, that are tapered towards a core, or a middle section of an electrode stack can facilitate an arrangement of a plurality of continuous areas. In this way a plurality of continuous areas of a cathode or of an anode can be arranged at a top (or a bottom) of a cell. Additionally or alternatively, continuous areas of both electrode types, i.e. of a cathode and an anode, can be arranged on the same side (top and/or bottom) of an electrode stack. In this way, the area available for the different continuous areas can be maximized.

An embodiment of the first aspect is related to a battery cell,
wherein tabs of both electrode layers are both extended towards the same top or bottom side of the electrode stack.

Continuous or non-continuous areas for both electrodes can be formed at the same side of the electrode stack. In this arrangement a focus needs to be on an appropriate isolation, in particular of the angled areas of the two tab types to avoid a short circuit. Accessing both electrode types from a single side may facilitate a design for a device that uses the battery cell. For example, tabs of different types can be arranged in continuous, concentric areas on a common side of a battery cell. This removes the need of concentrical adjustment of the battery relative to the battery matrix/cell holder, since both electrodes can be assessed in every angle the battery is installed.

An embodiment of the first aspect is related to a battery cell,
wherein the angled parts of the tabs of one electrode layer are radially shifted relative to the angled parts of the tabs of the other electrode layer, in particular such that alternating areas of angled parts of one electrode type are formed.

Additionally or alternatively to forming tab areas concentric over a side (top or bottom) of an electrode stack, tab areas can also be formed radially shifted, e.g. shifted by a pre-defined angle. This enables the formation of tab areas that extend from the edge of the electrode stack to a center or core of the electrode stack, such as circle-sectors ("cake-pieces" or "half-moons") in case of a cylindrical cell.

An embodiment of the first aspect is related to a battery cell,
wherein the angled parts of the tabs of one electrode layer are axially spaced from the angled parts of the tabs of the other electrode layer relative to the center axis of the electrode stack roll.

Axially shifted angled parts can also form continuous (or non-continuous) areas. This can be done, e.g., by folding the tabs at different heights over a top or a bottom of an electrode stack. In particular this can be used to separate/isolate cathode tabs from anode tabs from each other. In one example for a cylindrical cell, cathode tabs are formed at three different continuous areas which are formed as a cake piece each. Each area covers an angle of 60 degree over the top or the bottom of the electrode stack. Between the areas 60-degree-wide free spaces are formed. Over each free space, an anode tab is formed that has the same circle-sector form as the cathode tab. The anode tab areas are axially spaced about 3mm from the cathode tab areas. Between the tabs a 3mm deep isolation ring made of plastic (or another electrically isolating material) can be formed in order to isolate and to support the tab areas. In this way, current collectors of both electrodes can be arranged at one side and are separated/isolated from each other effectively.

An embodiment of the first aspect is related to a battery cell,
comprising:
a lid with cut-outs that are adapted to match the pre-defined pattern.

The cut-outs can be formed in order to save weight and to weld to the remaining material of the lid to the cathode or anode tabs. In case both poles are formed at a single side, a lid for connecting to one type of electrodes (cathodes or anodes) can have one or more cut-outs matched to respective electrode tab areas. A lid does not necessarily need to close a housing. A lid can also be shaped like a disc, e.g. a collector disc. Another lid (or collector disc), which is configured to be connected to the other electrode, can have respective cut-outs for the electrode to which it is not connected to. The lids can be stacked on top of each other. Furthermore, lids can be configured to isolate cathode (or anode) tabs from the anode (or cathode) tabs. A lid can be used to connect the cathode (or anode) tabs (e.g. by crimping or welding) and can be stacked upon another lid, which is configured to be connected to anode (or cathode) tabs. Furthermore, a second lid stacked upon a first lid can be configured to lead the part of the first lid that is connected to electrode tabs to the outside. In other words the second lid can be configured to lead the plus-pole and the negative-pole to the outside of the battery. The cut-outs can be used as openings for adding an electrolyte to the electrode stack.

An embodiment of the first aspect is related to a battery cell,
wherein the lid comprises a part which is connected to a can of the battery cell.

Thereby, the lid can be supported by the can. Additionally or alternatively, a lid can be electrically connected to a can in order to connect the anode or the cathode to the can of the battery.

An embodiment of the first aspect is related to a battery cell,
comprising two lids, wherein one lid is connected to cathode tabs and the other lid is connected to anode tabs and wherein both lids are stacked upon each other.

Such an arrangement can be used in particular for battery cells that comprise a cathode and an anode being led out of the battery at a common side. The stacked lids (collector discs) may differ in their axial position relative to the battery cell. The second lid that is stacked upon the first lid will have a greater distance to the side (top/bottom) of the battery. In this case, the tabs that are connected to the second lid may comprise angled parts that are axially spaced from the angled parts of the tabs of the other electrode that are connected to the first lid. By this arrangement it can be assured that there is no gap between the lids and their tabs before they are crimped or welded together.

An embodiment of the first aspect is related to a battery cell,
wherein tabs of one electrode layer are formed at the top and tabs of the other electrode layer are formed at the bottom of the electrode stack roll.

This arrangement provides accessibility of the anode and the cathode from different sides. It also allows tabs of the cathode and/or the anode to be formed concentrically and such that they cover a large part of the side they are arranged on. Because in this case there may be no need for reserving space for tabs of the other electrode.

An embodiment of the first aspect is related to a battery cell,
comprising an isolator arranged between the angled parts of cathode tabs and the angle parts of anode tabs.

The isolator can be configured as a part of the separator and/or as a separate isolator. The isolator can in particular be based notched isolator parts, i.e. isolator 'tabs', that are arranged between isolator tabs of a cathode and an anode (if they are extended/angled at a common side, i.e. top or bottom, of a wound-up electrode stack). Additionally or alternatively, a separator can be an isolating part that is inserted into the battery. This can be, e.g., an isolator ring that is arranged within the battery such that cathode and anode tabs / tab areas are isolated effectively. In case cathode and anode tabs are separated radially, the isolator can be placed radially between the cathode and anode tab areas. In case cathode and anode tabs are separated by a concentrical shift, the isolator can be placed (concentrically) between the cathode and anode tab areas. In case cathode and anode tabs are separated axially, the isolator can be placed axially between the tabs / tab areas. The isolator can be a foil or a stiff part, in particular a plastic or ceramics part, e.g. an injection molded part. An isolator can comprise plastic and/or ceramics.

A second aspect of the present disclosure is related to a method for manufacturing a battery cell,
comprising the steps:
- forming an electrode layer, in particular an anode layer or a cathode layer;
- forming tabs on one side of the electrode layer with a varying length and/or a varying distance between each other;
- forming an electrode stack based on the electrode layer comprising an anode layer and a cathode layer;
- winding up the electrode stack to an electrode stack roll , wherein the tabs extend the electrode stack roll at a top or a bottom ;
- folding the extending part of the tabs towards the respective top or bottom of the electrode stack roll.

A folding has the goal to provide an area of one or more tabs that is at least partly parallel to a side of the battery stack, i.e. the top or the bottom. A folding can therefore also comprise a plating or a pressing.

An embodiment of the second aspect is related to a method for manufacturing a battery cell,
comprising the step:
- before folding all tabs, inserting an electrolyte in the electrode stack.

For example, if tabs to be folded exist on both sides of an electrode stack, the tabs of the bottom side can be folded in a first step. Then the electrode stack can be inserted into a can. In a next step the can can be flooded with an electrolyte such that the electrode layer is penetrated by the electrolyte. In a next step, the electrode tabs of the top side are folded. Afterwards a lid is placed on the top of the can and the battery cell is sealed.

### Brief description of the figures

Further advantages and features result from the following embodiments, some of which refer to the figures. The figures do not always show the embodiments to scale. The dimensions of the various features may be enlarged or reduced, in particular for clarity of description. For this purpose the figures are at least partially schematized.
Fig. 1 illustrates an electrode stack for a battery cell according to an embodiment of this disclosure.
Fig. 2 illustrates tabs of an electrode stack for a battery cell according to different embodiments of this disclosure.
Fig. 3 illustrates a battery cell according to an embodiment of this disclosure.
Fig. 4 illustrates a battery cell according to an embodiment of this disclosure.
Fig. 5 illustrates a battery cell according to an embodiment of this disclosure.
Fig. 6 illustrates a method for manufacturing a battery cell according to an embodiment of this disclosure.

In the following description reference is made to the accompanying figures which form part of the disclosure, and which illustrate specific aspects in which the present disclosure can be understood. Identical reference signs refer to identical or at least functionally or structurally similar features.

In general, a disclosure of a described method also applies to a corresponding device (or apparatus) for carrying out the method or a corresponding system comprising one or more devices and vice versa. For example, if a specific method step is described, a corresponding device may include a feature to perform the described method step, even if that feature is not explicitly described or represented in the figure. On the other hand, if, for example, a specific device is described on the basis of functional units, a corresponding method may include one or more steps to perform the described functionality, even if such steps are not explicitly described or represented in the figures. Similarly, a system can be provided with corresponding device features or with features to perform a particular method step. The features of the various exemplary aspects and embodiments described above or below may be combined unless expressly stated otherwise.

### Detailed description

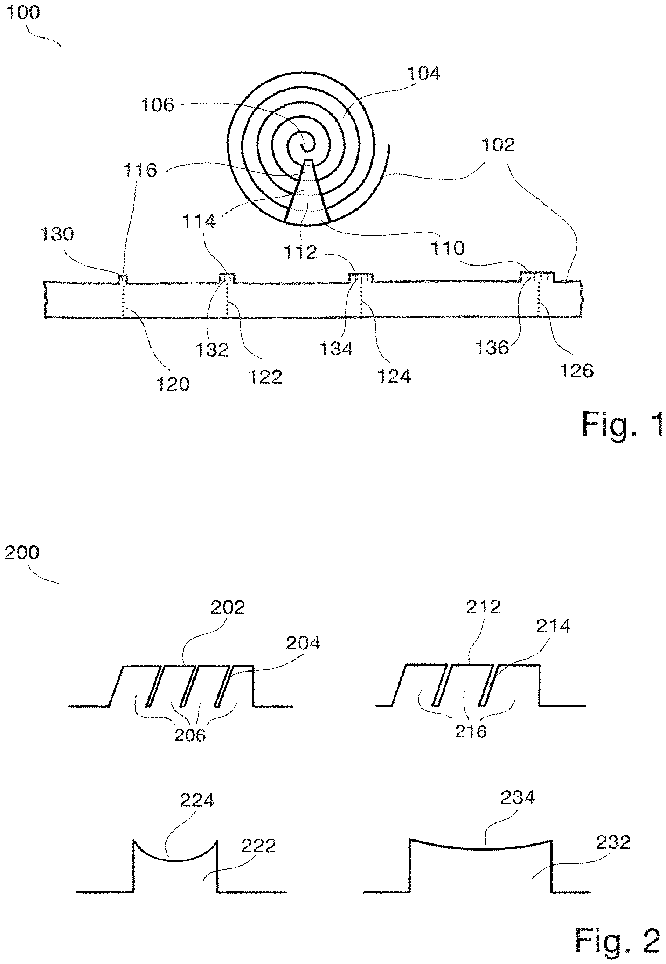

Fig. 1 illustrates an electrode stack 100 with tabs arranged in a pattern, for a battery according to embodiments of this disclosure. The illustrated electrode stack 102 comprises a cathode layer, a separator layer, and an anode layer. The single layers are not shown. The electrode stack is wound-up to a cylindrical form. In this form, it has a side 104 that can be described as the bottom or the top of the wound-up electrode stack 102. The electrode stack 102 is also shown in its unwound form in the illustration at the bottom of the figure.

The electrode stack 102 comprises a first tab 110 that is folded in the direction of the center 106 of the side 104 after the electrode stack is wound-up into a cylindrical spiral. The tab can either belong to the cathode or to the anode of the electrode stack. The electrode stack comprises further tabs 112, 114, 116. The four tabs 110 - 116 are arranged in a pre-defined pattern such that they can form a tab area after they are folded in the direction of the center of the side 104. The tab area can be described a cake-piece-formed area. The pre-defined pattern in which the tabs are arranged on the electrode is responsible for this.

As can be seen in the unwound electrode, the four tabs 110 - 116 differ in size from each other. The tab 110 that is located in the wound-up electrode stack on the edge of side 104 is the longest of the four tabs. The tab 116 that is located in the wound-up electrode stack next to the center 106 of the side 104 is the shortest tab. The tabs 112 and 114 arranged between the tabs 110 and 116 are sized such that the four tabs increase in their length from left to right in the unwound electrode stack. By this first pattern the tabs can form the cake-piece-formed area if they are arranged next to each other in the wound-up electrode stack.

In order to be arranged next to each other in the wound-up electrode stack, the tabs are arranged in a second pattern with an increasing spacing between each other. On the unwound electrode stack, tab 110 is arranged at position 126, tab 112 is arranged at position 124, tab 114 is arranged at position 122, and tab 116 is arranged at position 120. The distance of the tabs 110 and 112, i.e. the distance between 126 and 124 is the largest distance between two tabs. The distance of the tabs 112 and 114, i.e. the distance between 124 and 122 is smaller than the previous distance. The distance of the tabs 114 and 116, i.e. the distance between 122 and 120 is the smallest distance between two tabs of the four tabs of the illustrated electrode stack. Because of this arrangement of decreasing distances, the tabs 110 - 116 are arranged radially next to each other in the wound-up electrode stack. After folding the tabs in the direction of the center 106 of the electrode stack, the cake-piece-formed area is obtained.

When the electrode stack is wound-up, the tabs are deformed, i.e. bent. Their outer side as more space than their inner side. This could lead to problems, as the tabs might become rippled or
rip apart completely. To overcome this problem, the tabs can be formed with incisions or cut-outs. The tab 110 has four incisions 136. The tab 112 has three incisions 134. The tab 110 has two incisions 132. The smallest tab 110 has only one incision 130. The incisions allow the different tab-parts formed by the incision to overlap if the tab is bent, i.e. in the wound-up electrode stack. Therefore, each of the tabs 110 - 116 is transformed from a rectangular form in the unwound form to a trapezoid form in the wound-up form. Based on the four trapezoid-formed tabs (folded part of the tabs), the cake-piece-formed tab area is formed.

Tabs with a pre-defined pattern are not restricted to cylindrically formed electrode stacks. They can also be used for oval wound-up electrode stacks. Alternatively, tabs arranged in a pre-defined pattern can be formed for a prismatic wound-up electrode stack. They can be patterned, e.g., such that two tab areas are formed. One of the tab areas can be formed by cathode tabs and the other tab area can be formed by anode tabs. Then a cathode pole and an anode pole can be formed on the same side (top and/or bottom) of the electrode stack.

Fig. 2 illustrates tabs 200 of an electrode stack for a battery according to different embodiments of this disclosure. The figure illustrates four different tab types. Each type comprises a feature by which the tab can adapt to a bending, in particular a bending that occurs in a wound-up electrode stack.

The first tab type 202 is similar to the tab 112 of Fig. 1. It comprises three incisions 204. The incisions are formed in the tab in order that the four different tab parts 206, which are generated by the incision, can move relative to each other such that the endings of the tab parts 206 can overlap if the tab is bent. In this way the tab can be folded in a wound-up electrode stack without any tensions being generated in the tab.

The second tab type 212 has cut-outs instead of incisions. The cut-outs 214 provide more flexibility as the incisions 204 because they are broader and allow a relative movement of the tab parts 216 without immediately overlapping. The illustrated cut-outs are rather thin. Cut-outs can be wider, e.g., featuring half of the width or the same width as a tab part 216 generated by a cut-out.

The third tab type 222 and the fourth tab type 232 have non-even ends 224, 234. The ends can be formed according to the expected bending in a wound-up electrode stack. The tab 222 with the round end 224 can be formed for a tab closer to the center of an electrode stack than the tab 232 with the round end 234. The latter can be formed for a tab formed closer to an outer edge of an electrode stack.

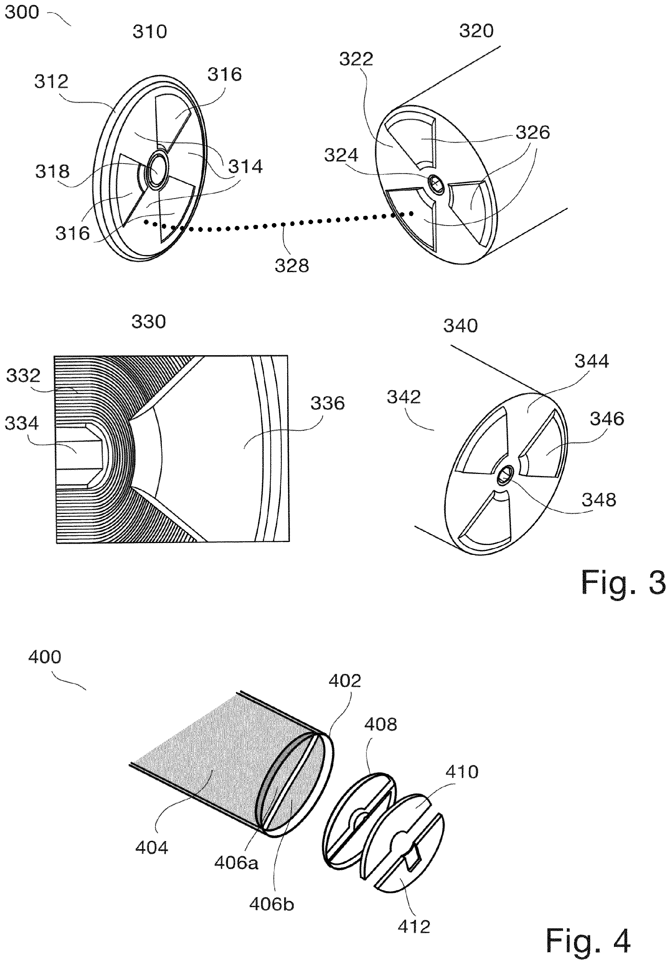

Fig. 3 illustrates a battery cell 300 according to an embodiment of this disclosure. The battery cell comprises tabs with angled parts that form anode areas for contacting a first battery pole on the top side of the battery. Furthermore, the battery cell comprises tabs with angled parts that form cathode areas for contacting a second pole formed by bottom and by the whole the can of the battery.

The battery cell 300 has a cylindrical form and comprises a can, shown in subfigure 320 comprising a wound-up electrode stack. The can is configured to be closed with a lid, shown in subfigure 310. The edge of the lid 312 is configured to seal and isolate the connection between the lid and the can. Furthermore, the lid comprises a disc configured to contact angled parts of anode tabs 326 extended from the top 322 of the electrode stack. Therefore, the disc comprises three contact areas 314. On the contact areas, the lid is welded to the anode tab areas 326. This is indicated by the dotted line 328. The anode tab areas are formed by angled, e.g. folded, anode tabs that are arranged in a pattern such that they form the three continuous cake-piece-like tab areas 326 in the wound-up electrode stack 320.

In order to not contact any cathode parts and to save weight of the battery cell, the disc comprises three cut-outs 316 which are arranged alternately with the anode contact areas 326. In the center, the lid 310 comprises an anode contact 318 configured to provide an external anode pole connection, i.e. the plus pole of the battery. The anode contact can also be configured to seal/isolate the winding core 324 of the electrode stack.

Subfigure 330 closely shows the top 322 of the electrode stack. An electrode stack 332 is wound up around a winding core 334. The wound-up electrode 332 comprises anode tabs that are arranged such that they can be angled to form a continuous cake-piece-like anode tab area 336. In the electrode stack the anode and the cathode layers are staggered such that the angled anode tabs cannot contact the cathode electrode. Additionally or alternatively, an isolator can be arranged between the anode tabs to prevent contact to the cathode. This isolator can, e.g., be provided by the separator foil which extends such that it is folded together with the anode tabs and thereby covers the parts of the cathode that are formed between the folded anode tabs.

Subfigure 340 shows the other side of the electrode stack 342 of subfigure 320 with the bottom 344 configured to provide cathode contact areas 346. The cathode contact areas are structurally similar to the anode contact areas. The tabs for the cathode contact areas are formed on the other side of the electrode stack and are folded to the winding core 348 after the electrode stack has been wound-up. When placed in the can 320, the cathode areas can be welded to the can making the can the negative pole of the battery.

Fig. 4 illustrates a battery cell 400 according to an embodiment of this disclosure. The battery cell is configured to provide a plus pole, i.e. an anode connection, and a minus pole, i.e. a cathode connection, on the top side of the battery cell.

The battery cell comprises a can 402 that hosts an electrode stack 404. On the top side of the electrode stack an area 406a of anode tabs and an area REF406b of cathode tabs are formed similar to half circles. The two tab areas REF406a, 406b are isolated from each other (not illustrated). On top of the two tab areas, a ring 408 is placed that contains two areas for a plus pole contact means 410 and a minus pole contact means 412. The ring 408 provides isolation and support for the pole contact rings. The pole contact rings are welded to the respective anode and cathode tab area 406a, 406b and can be connected to a lid (not shown) in order to provide pole connections to the outside of the battery cell.

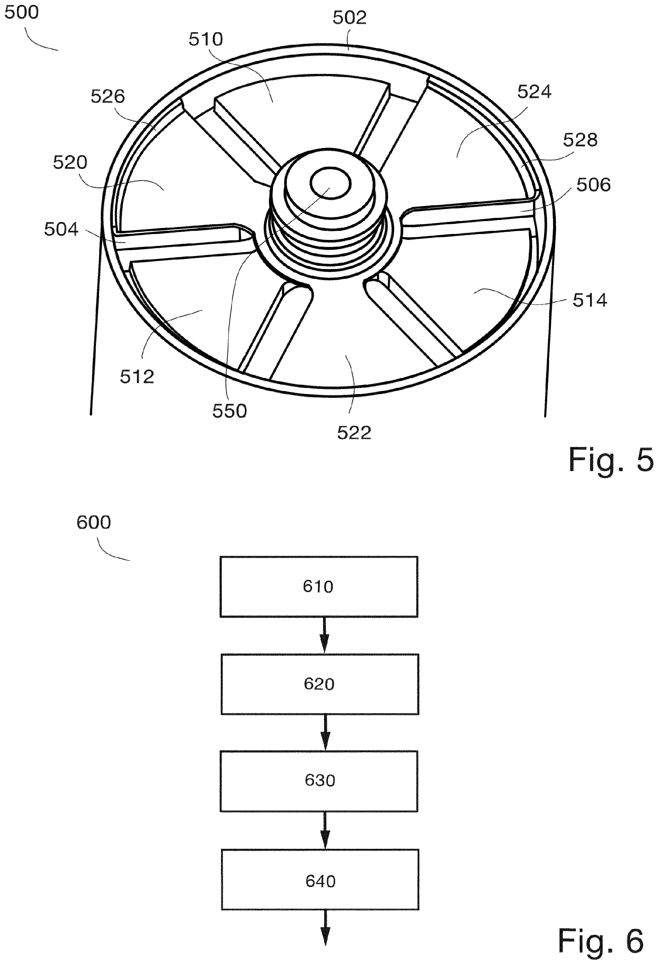

Fig. 5 illustrates a battery cell 500 according to an embodiment of this disclosure. The battery cell is configured to provide a first pole, i.e. an anode connection, and a second pole, i.e. a cathode connection, on the top side of the battery cell.

The battery cell comprises pole two pole rings (or collector discs). Each is configured to electrically contact one electrode type. Both pole rings are stacked on top of each other.

The first pole ring (or collector disc) comprises the anode contact areas 510, 512, 514. They are formed in a cake-piece-style and contact folded anode tabs (not shown) that are arranged below the respective contact areas. The pole ring is electrically connected to the center 550 in order to lead the anode contact to the outside of the battery.

The second pole ring comprises cathode contact areas 520, 522, 524. They are also formed in a cake-piece-style and contact folded cathode tabs that are arranged below the respective contact areas. The cathode contact areas 520 - 524 are concentrically shifted by 60 degree and alternately arranged to the anode contact areas 510 - 514. Additionally, the cathode contact areas are axially shifted to the anode contact areas, because their pole ring is arranged on top of the first anode pole ring. In order to contact the cathode tabs by an axially shifted pole ring, the angled parts of the cathode tabs are arranged higher than the angled parts of the anode tabs. The contact area 520 is contacted to angled parts of cathode tabs that form a continuous area 504. The contact area 524 is contacted to angled parts of cathode tabs that form a continuous area 506. By arranging the angled parts of the cathode tabs higher than the angled parts of the anode tabs room for isolation of the two tab types is provided.

Only the cathode contact areas 520 - 524 are connected to the can 502. This is done by the areas 526, 528 of the respective cathode contact areas, where they are welded to the can in order to establish an electrical connection of the cathode to the can.

Fig. 6 illustrates a method 600 for manufacturing a battery according to an embodiment of this disclosure. In a first step 610 an electrode layer, in particular an anode layer or a cathode layer, is formed. In a second step 620 tabs are formed on one side of the electrode layer with a varying length and/or a varying distance between each other. This can be done by laser cutting the electrode layer such that the tabs remain. In a third step 630, based on the electrode layer which contains the tabs, an electrode stack is formed that comprises an anode layer and a cathode layer. Thereby, one of the anode or cathode layer is the electrode layer with the tabs. The other layer can also comprise tabs that are arranged in a certain pattern. After the electrode stack is formed, the stack is wound-up, e.g. in a cylindrical, oval, or prismatic form, to an electrode stack roll, wherein the tabs extend the electrode stack roll at a top or a bottom. In a fourth step 640, the extending part of the tabs are folded, e.g. to the center of the electrode stack roll, such that they form one or more continuous areas for contacting the respective electrode. Before the tabs are folded, the electrode stack roll can be inserted into a can and filled up with an electrolyte.

As used herein the term "and/or" includes any and all combinations of one or more of the associated listed items and may be abbreviated as "/".

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

### List of reference signs

- 100: electrode stacks with tabs pattern
- 102: cylindrical electrode stack
- 104: top or bottom of wound up electrode stack
- 106: center
- 110: first tab
- 112: second tab
- 114: third tab
- 116: fourth tab
- 120: distance indicator
- 122: distance indicator
- 124: distance indicator
- 126: distance indicator
- 130: incision
- 132: incisions
- 134: incisions
- 136: incisions
- 200: tab formations
- 202: first tab type
- 204: incisions
- 206: tab parts by incision
- 212: second tab type
- 216: tab parts by cut outs
- 222: third tab type
- 224: round end
- 232: fourth tab type
- 234: round end
- 300: batter cell
- 310: lid
- 312: edge of lid
- 314: anode contact area
- 316: cathode cut out
- 318: anode contact
- 320: can
- 322: top
- 326: anode tab areas
- 328: indication of connected areas
- 330: top
- 332: wound up electrode stack
- 334: winding core
- 336: anode tab area
- 340: bottom of electrode stack
- 342: electrode stack
- 344: bottom
- 346: cathode contact areas
- 348: winding core
- 400: battery cell
- 402: can
- 404: electrode stack
- 406a: anode tab are
- 406b: cathode tab area
- 408: isolating ring
- 410: contact means anode tab area
- 412: contact means cathode tab area
- 500: battery cell
- 504: cathode tabs
- 506: cathode tabs
- 510: first low contact for anode tabs
- 512: second low contact for anode tabs
- 514: third low contact for anode tabs
- 520: first high contact for cathode tabs
- 522: second high contact for cathode tabs
- 524: third high contact for cathode tabs
- 526: lip for can connection
- 528: lip for can connection
- 550: contact for anode
- 600: method for manufacturing a battery cell
- 610: first step
- 620: second step
- 630: third step
- 640: fourth step

## Claims

1. Battery cell,
comprising:
- an electrode stack (102) with two electrode layers, an anode layer and a cathode layer, that are arranged over each other and wound-up as a role such that it comprises a curved surface, a top and a bottom;
- a plurality of tabs (110 - 116) arranged at an edge of an electrode layer such that the tabs extend towards the top or the bottom of the electrode stack role and wherein the tabs comprise an angled part each, which is angled towards the respective top or bottom (104);
- wherein the angled parts form a pre-defined pattern.

2. The battery cell according to the preceding claim,
wherein some adjacent tabs (116, 114) arranged at the edge of the electrode are separated from each other at a first distance and some adjacent tabs (114. 112) are separated from each other at a distance different from the first distance.

3. The battery cell according to the preceding claim,
wherein some of the tabs arranged at the edge of the electrode layer (102) differ in a length parallel to the edge of their electrode layer.

4. The battery cell according to one of the preceding claims,
wherein some of the tabs arranged at the edge of the electrode layer (102) differ in a length perpendicular to the edge of the electrode layer.

5. The battery cell according to one of the preceding claims,
wherein one or more of the tabs of an electrode layer (102) have angled parts that comprise a curved-cut end.

6. The battery according to one of the preceding claims,
wherein one or more of the tabs of an electrode layer (102) are sliced and/or perforated.

7. The battery cell according to one of the preceding claims,
wherein some of the tabs of an electrode layer (102) have angled parts that form a continuous area.

8. The battery cell according to one of the preceding claims,
wherein some of the tabs of an electrode layer (102) have angled parts that form a plurality of continuous areas (326).

9. The battery cell according to one of the preceding claims,
wherein some of the tabs of an electrode layer (102) have angled parts that form one or more continuous areas (110b) that are tapered towards the center axis of the electrode stack role.

10. The battery cell according to one of the preceding claims,
wherein tabs of both electrode layers (406a, 406b) are both extended towards the same top or bottom side of the electrode stack (404).

11. The battery cell according to the preceding claim,
wherein the angled parts of the tabs (110 - 116) of one electrode layer (102) are radially shifted relative to the angled parts of the tabs of the other electrode layer, in particular such that alternating areas of angled parts of one electrode type are formed.

12. The battery according to the preceding claims 8 or 9,
wherein the angled parts of the tabs (504) of one electrode layer are axially spaced from the angled parts of the tabs of the other electrode layer relative to the center axis of the electrode stack roll.

13. The battery according to one of the preceding claims,
comprising:
a lid (310) with cut-outs (316) that are adapted to match the pre-defined pattern.

14. The battery according to the preceding claim,
wherein the lid comprises a part (526, 528) which is connected to a can (502) of the battery cell.

15. The battery according to one of the preceding claims,
comprising two lids (500), wherein one lid is connected to cathode tabs and the other lid is connected to anode tabs and wherein both lids are stacked upon each other.

16. The battery according to one of the preceding claims,
wherein tabs (326) of one electrode layer are formed at the top and tabs (346) of the other electrode layer are formed at the bottom of the electrode stack roll (342).

17. The battery cell according to one of the preceding claims,
comprising an isolator arranged between the angled parts of cathode tabs and the angle parts of anode tabs.

18. Method for manufacturing a battery cell,
comprising the steps:
- forming an electrode layer (102), in particular an anode layer or a cathode layer;
- forming tabs (110 - 116) on one side of the electrode layer with a varying length and/or a varying distance between each other;
- forming an electrode stack (102) based on the electrode layer comprising an anode layer and a cathode layer;
- winding up the electrode stack to an electrode stack roll (102), wherein the tabs extend the electrode stack roll at a top or a bottom (104);
- folding the extending part of the tabs towards the respective top or bottom of the electrode stack roll.

19. The method according to the preceding claim,
comprising the step:
- before folding all tabs, inserting an electrolyte in the electrode stack.
